# EUROPÄISCHE PATENTSCHRIFT

(11) **EP 3 084 388 B1**
(45) Veröffentlichungstag und Bekanntmachung des Hinweises auf die Patenterteilung: **18.04.2018**
(21) Anmeldenummer: 14816131.8
(22) Anmeldetag: 16.12.2014
(51) Int. Cl.: G01N 5/04

(54) **TIEGELHEBER**
PAN LIFTING DEVICE
TENAILLE DE CREUSET

(30) Priorität: 17.12.2013 DE 102013114161
(43) Veröffentlichungstag der Anmeldung: 26.10.2016
(73) Patentinhaber: Sartorius Lab Instruments GmbH & Co. KG, 37079 Göttingen (DE)
(72) Erfinder: DUDDA, Olaf, 37081 Göttingen (DE); SPANNAGEL, Wilfried, 37081 Göttingen (DE); DEBEERST, Caroline, 37085 Göttingen (DE); FÄRGER, Daniel, 37154 Northeim (DE); SIEDEL, Jörg, 37085 Göttingen (DE)
(86) Internationale Anmeldenummer: PCT/EP2014/003369
(87) Internationale Veröffentlichungsnummer: WO 2015/090561

(56) Entgegenhaltungen:
- FR-A- 784 609
- FR-A- 788 517
- FR-A1- 2 406 985
- US-A- 1 541 738
- US-A- 2 333 564
- US-A- 5 787 600
- US-A1- 2001 039 831

## Beschreibung

Die Erfindung betrifft einen Tiegelheber zum formschlüssigen Erfassen eines Tiegels einer Waage, wobei der Tiegel einen Boden und einen nach oben abstehenden, umlaufenden Rand aufweist.

Die Erfindung betrifft insbesondere einen Tiegelheber zum Erfassen eines Einmal-Tiegels einer Trocknungswaage. Bei Trocknungswaagen wird das Wägegut auf seinem Wassergehalt hin überprüft. Dabei wird das Wägegut erst gewogen und anschließend einer definierten Wärmebehandlung unterzogen.

Ein Verfahren zum Bestimmen des Wassergehalts durch eine Trocknungswaage ist in der DE 38 32 726 C2 beschrieben.

Die EP 1 004 859 B1 zeigt eine Trocknungswaage, bei der über den herausnehmbaren Tiegel eine Abdeckung gefahren wird, um einen Wägeraum zu schließen. Zum Herausnehmen des Tiegels wird die Abdeckung wieder zurück in das Gehäuse der Trocknungswaage gefahren. Damit ist die Erreichbarkeit des Tiegels optimiert.

Es gibt aber auch Trocknungswaagen, d.h. vor allem oberschalige Trocknungswaagen, bei denen keine verfahrbare Abdeckung vorhanden ist, so dass der Wägeraum geschlossen ist und über eine klappbare Abdeckung erreichbar ist. Dadurch muss der Tiegel seitlich in den Wägeraum eingebracht werden. Bekanntlich ist es dabei wichtig, dass der Tiegel mit einem Werkzeug gehandhabt wird, um keine Verunreinigungen am Tiegel zu hinterlassen.

Ein Tiegelheber zum Erfassen und Befördern eines Tiegels ist in der DE 202 10 500 U1 beschrieben. Dieser Tiegelheber wird von oben über den Tiegel gesetzt, wobei ein Griff vertikal verläuft, von dessen unterem Ende zwei entgegengesetzt verlaufende Schenkel abstehen. Am Ende dieser Schenkel sind jeweils U-förmige Aufnahmen angebracht, die, von oben kommend, den Rand des Tiegels umfassen und sich bis zum Boden erstrecken. Der Tiegel wird also von der diametral gegenüber liegenden Seite aus gefasst, indem die Schenkel radial und gegeneinander drücken.

Pinzetten und Zangen, die aus der US 2 595 683 A, DE 20 2012 102 499 U1 und der US 2005/0001439 A1 für gänzlich andere Zwecke bekannt sind, sind nicht geeignet, einen Tiegel seitlich zu erfassen, denn der Tiegel würde bei axialer Klemmung in der Pinzette oder Zange kippen.

Aus der US 1 541 738 A ist ein zangenartiges Küchenhebewerkzeug bekannt, bei dem zwei Griffschenkel über ein Scharnier miteinander verbunden sind. Eine Blattfeder drückt die Griffenden voneinander weg und damit die vor dem Scharnier liegenden Greifabschnitte aufeinander zu. Ein unterer Abschnitt hat einen plattenförmigen Auflagevorsprung. Mit der gezeigten Universalzange sollen verschiedene Pfannen gehoben werden können.

Die FR 784 609 A beschreibt eine Klemmvorrichtung für Pfannen, bei der jedoch der obere Griff und der untere Griff am rückseitigen Griffende ineinander übergehen. Der untere Griffschenkel hat einen plattenartigen Vorsprung, der unter der Pfanne zu liegen kommt, wogegen der oberseitige Griffschenkel einen hakenförmigen Fortsatz hat, der beim Zusammendrücken der Griffschenkel auf der Innenseite der Pfanne zu liegen kommt.

Wieder ein Pfannenheber in Form einer Zange ist aus der FR 788 517 A bekannt. Dieser Pfannenheber ist wie eine Schere oder Zange ausgeführt, am unteren Griffende ist ein unterhalb der Pfanne liegender plattenartiger Fortsatz und am oberen Griffende ein nach unten offener, u-förmiger Fortsatz angeformt, der den oberen Rand der Pfanne erfassen soll.

Die US 2 333 564 A beschreibt einen Pfannenheber, dessen unterer Griffschenkel als planes Teil ausgeführt ist. Über eine Schwenkachse ist ein oberer Griffschenkel schwenkbar am unteren Griffschenkel angelenkt. Im Bereich der Enden der Griffschenkel ist eine Druckfeder zwischen den Griffschenkeln vorhanden, die den Pfannenheber in eine Klemmstellung vorspannt. Eine ganz ähnliche Zange zeigt die FR 2 406 985 A1.

Aufgabe der Erfindung ist es, einen Tiegelheber für eine Trocknungswaage zu schaffen, der eine leichtere Handhabbarkeit des Tiegels insbesondere bei Trocknungswaagen erlaubt, die eine klappbare Abdeckung zum Öffnen des Wägeraums aufweisen.

Bei solchen Trocknungswaagen ist der bekannte Tiegelheber nachteilig, er benötigt viel Platz in seiner Handhabung.

Die Aufgabe wird durch einen Tiegelheber nach Anspruch 1 gelöst, bei dem der Tiegelheber ein tiegelseitiges, zangenartiges Ende und einen entgegengesetzten Griff aufweist, wobei das zangenartige Ende einen schaufelartigen Auflagevorsprung, der unter dem Boden des Tiegels zu liegen kommt, sowie einen zum Auflagevorsprung hin und von ihm weg beweglichen, über dem Auflagevorsprung positionierten Schnabel hat, der abgekröpft ist und den Rand des Tiegels formschlüssig erfasst und klemmt, wobei der Auflagevorsprung in entgegengesetzter Richtung zum Griff den am weitesten nach vorne springenden Teil des Tiegelhebers bildet.Beim erfindungsgemäßen Tiegelheber sind die beiden Abschnitte, die am Tiegel angreifen, übereinander angeordnet und zueinander beweglich. Der Auflagevorsprung stützt den Boden, so dass der Boden des Tiegels auf ihm aufliegt. Der Schnabel hingegen greift am darüber liegenden Randabschnitt des Tiegels an und erfasst diesen, so dass der Tiegel nur in einem schmalen Bereich geklammert wird und dadurch seitlich aus dem Wägeraum herausnehmbar ist. Somit muss der Bediener mit seiner Hand nicht in den Wägeraum hineingreifen, sondern kann den Tiegel von außen herausnehmen. Der Griff hat zwei zueinander bewegliche Griffschenkel, nämlich einen oberen und einen unteren Schenkel. Der eine Griffschenkel ist mit dem Auflagevorsprung und der andere Griffschenkel mit dem Schnabel gekoppelt, so dass mit Relativbewegung der Griffschenkel der Auflagevorsprung und der Schnabel relativ zueinander bewegt werden, um das zangenartige Ende zu öffnen oder zu schließen. Die Handhabung des Tiegelhebers erfolgt also am Griff selbst. Die beiden Griffschenkel gehen an ihrem freien Griffende zur Bildung eines Scharniers ineinander übergehen oder sind dort miteinander gekoppelt. Damit werden Teile gespart, und der Tiegelheber kann sehr leicht und sehr einfach ausgeführt sein. Der obere Griffschenkel ist mit dem Auflagevorsprung und der untere Schenkel mit dem darüber liegenden Schnabel gekoppelt, so dass die Griffschenkel sich in Seitenansicht kreuzen. Die sich bildenden Kreuzungsstelle ist dadurch gebildet, dass ein Griffschenkel eine Durchtrittsöffnung hat, durch die sich der andere Griffschenkel hindurch erstreckt. Die Kreuzungsstelle sollte so groß ausgeführt sein, dass eine Relativbewegung der Griffschenkel zum Öffnen und Schließen des zangenartigen Endes möglich ist.

Vorzugsweise ist der Griff leicht gegenüber dem Auflagevorsprung nach oben abgewinkelt, verläuft aber bei benutztem Tiegel im Wesentlichen horizontal. Dies erlaubt es, wie bei einem Kuchenheber, den Tiegelheber zu fassen und unter den Tiegel zu schieben.

Dadurch, dass der Schnabel zum Auflagevorsprung beweglich ist, wird er bei geöffnetem Tiegelheber nach oben abstehen, so dass zuerst der Auflagevorsprung unter den Tiegel geschoben wird. Anschließend wird dann der Schnabel von oben kommend am Rand angreifen, um den Tiegel zu klemmen.

Eine Ausführungsform der Erfindung sieht vor, dass die Griffschenkel am freien Griffende unter Bildung einer U-Form ineinander übergehen. Damit bildet der Mittelabschnitt des "U" sozusagen das Scharnier.

Die Griffschenkel können einstückig in den Auflagevorsprung und in den Schnabel übergehen, d.h. ein Griffschenkel geht einstückig in den Auflagevorsprung und der andere in den Schnabel über. In diesem Zusammenhang kann es von Vorteil sein, wenn die Griffschenkel zumindest abschnittsweise aus Kunststoff bestehen, so dass Auflagevorsprung und Schnabel aus Kunststoff gebildet sind. Dies erlaubt eine schonende Handhabung des Tiegels.

Die Griffschenkel können federnd zueinander ausgebildet sein, d.h. es ist eine federnd vorgespannte Ausgangsstellung vorgegeben, und die Griffschenkel müssten dann gegen die Federkraft bewegt werden, um das zangenartige Ende zu öffnen oder zu schließen.

In den Griff kann eine mit den Griffschenkeln verbundene Blattfeder integriert sein, die die Federwirkung herbeiführt. Alternativ hierzu können die Griffschenkel als Blattfeder ausgebildet sein, indem eine U- oder V-geformte Blattfeder mit ihren Schenkeln die beiden Griffschenkel bildet. Bei dieser Ausführungsform werden dann der Auflagevorsprung und der Schnabel an die zugeordneten Blattfederschenkel angebracht, z.B. durch Kleben, Anspritzen, Schrauben oder andere Befestigungsarten.

Die bevorzugte Ausführungsform sieht vor, dass der Tiegelheber kein Scharnier mit einer separaten Achse besitzt, sondern die Beweglichkeit des Tiegelhebers zum Öffnen und Schließen des zangenartigen Endes ausschließlich durch elastisches Verformen des Tiegelhebers möglich ist.

Der Auflagevorsprung läuft z.B. zum freien Ende hin, in Draufsicht betrachtet, zu und/oder wird in seiner Höhe, d.h. in seiner vertikalen Höhe zum freien Ende hin immer dünner. Diese Varianten erlauben es, den Auflagevorsprung einfach unter den Tiegelboden zu schieben.

Der Auflagevorsprung geht am griffseitigen Ende in einen nach oben ragenden Absatz über. Der Schnabel besitzt zumindest eine nach unten abstehende Abkröpfung, die gegen die Seitenfläche des Absatzes, welche dem Tiegelrand zugeordnet ist und an welcher der Tiegelrand anliegt, beweglich ist. Somit wird bei geöffneten zangenartigen Ende der Schnabel soweit nach oben weg ragen, dass der Auflagevorsprung unter den Boden bis zum Anschlagen des Tiegelrandes am Absatz geschoben werden kann, ohne dass der Schnabel dabei im Wege steht. Anschließend wird der Schnabel nach unten bewegt. Dadurch wird der Rand des Tiegels zwischen dem oder den Abkröpfungen und dem Absatz seitlich geklemmt. Die Abkröpfung liegt dann auf der Innenseite des Tiegelrandes an, die Außenseite des Tiegelrandes wird gegen den Absatz, genauer gesagt die Seitenfläche des Absatzes gedrückt.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Figur 1 eine perspektivische Ansicht einer ersten Ausführungsform des erfindungsgemäßen Tiegelhebers,
Figur 2 eine Längsschnittansicht durch den Tiegelheber nach Figur 1 in geöffnetem Zustand,
Figur 3 eine Längsschnittansicht durch den Tiegelheber nach Figur 1 in geschlossenem Zustand,
Figur 4 eine Perspektivansicht einer zweiten Ausführungsform des erfindungsgemäßen Tiegelhebers, und
Figur 5 eine Perspektivansicht einer dritten Ausführungsform des erfindungsgemäßen Tiegelhebers.

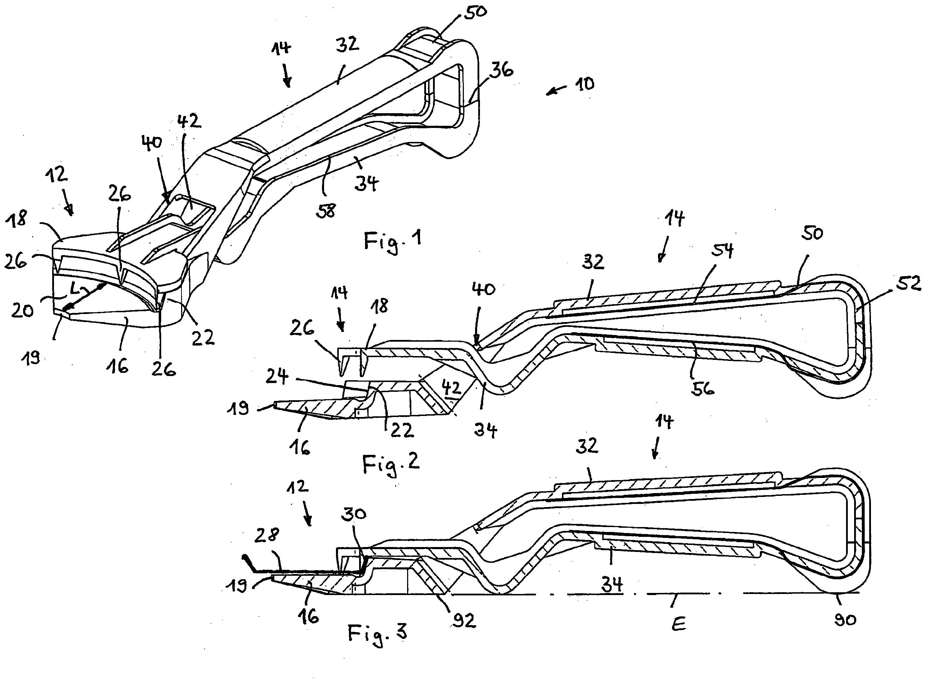

Figur 1 zeigt einen Tiegelheber 10, der zum seitlichen Einsetzen und seitlichen Herausnehmen eines Einmal-Tiegels in den Wägeraum einer Trocknungswaage dient.

Der Tiegelheber 10 umfasst mehrere Abschnitte, nämlich ein tiegelseitiges, zangenartiges Ende 12 sowie einen entgegengesetzten Griff 14.

Die Gesamtform des Tiegelhebers ist lang gestreckt, wobei in Seitenansicht (siehe Figur 1) der Griff 14 gegenüber dem zangenartigen Ende 12 etwas nach oben abgekröpft ist. Dadurch kann der Bediener mit den Fingern noch unter den Griff langen, wenn das zangenartige Ende bereits auf einen Boden der Trocknungswaage oder einer Ablagefläche aufgesetzt ist.

Das zangenartige Ende 12 umfasst zwei aufeinander zu und voneinander weg bewegliche Abschnitte oder Teile, nämlich einen schaufelartigen Auflagevorsprung 16 sowie einen leicht seitlich versetzt darüber liegenden, weniger weit nach vorne ragenden Schnabel 18.

Der Auflagevorsprung 16 stellt damit, in entgegengesetzter Richtung zum Griff 14, den am weitesten vorspringenden Teil des Tiegelhebers dar.

Wie in den Figuren 1 bis 3 gut zu erkennen ist, läuft der Auflagevorsprung 16 zu seinem freien Ende 19 hin zu, vorzugsweise konisch zu.

Alternativ oder zusätzlich wird die Höhe oder Dicke des Auflagevorsprungs zum freien Ende 19 hin immer geringer, wie ebenfalls in den Figuren 1 bis 3 gut zu erkennen ist.

Auf der Oberseite 20 des Auflagevorsprungs liegt der schalenartige Tiegel mit seinem Boden 28 auf.

Der Auflagevorsprung 16 geht in einen nach oben vorspringenden Absatz 22 über oder ist von diesem begrenzt, wobei der Absatz 22 eine zum Auflagevorsprung 16 hin weisende Seitenfläche 24 aufweist, an der der äußere Rand 30 des Tiegels bei Ergreifen desselben anliegt (siehe Figur 3).

Der Schnabel 18 hat an seinem vorderen, d.h. dem Auflagevorsprung nahen Ende nach unten mehrere Abkröpfungen 26. Nachdem der Absatz 22 eine Kreissegmentform aufweist, die dem der Kreisform des Tiegelrandes 30 entspricht, liegen die Abkröpfungen 26 ebenfalls auf einer Kreisbahn, in Draufsicht gesehen.

Die Abkröpfungen 26 liegen bei geschlossenem zangenartigen Ende (siehe Figur 3) an der Seitenfläche 24 an oder sind mit einem minimalen Spalt von dieser beabstandet, so dass der Tiegelrand 30 zwischen der Seitenfläche 24 und der gegenüberliegenden Innenseite der Abkröpfungen 26 geklemmt ist.

Die Abkröpfungen 26 sind umfangsmäßig voneinander getrennt und beabstandet, so dass sich punktartige Klemmstellen ergeben. Dies sichert die stabile Halterung der sehr dünnen Tiegel.

In Figur 3 ist mit unterbrochenen Linien ein geklemmter Tiegel eingezeichnet.

Der Auflagevorsprung 16 sowie der Schnabel 18 gehen in den Griff 14 über.

Der Griff 14 hat zwei längs zueinander verlaufende Griffschenkel, nämlich einen oberen Griffschenkel 32 sowie einen unteren Griffschenkel 34.

Die Griffschenkel 32, 34 sind am freien Griffende miteinander verbunden. Die Linie in Figur 1 symbolisiert die Schnittstelle 36 der beiden als separate Teile gefertigten Griffschenkel 32, 34. In diesem Bereich sind die Griffschenkel 32, 34 zum Beispiel miteinander verschraubt. Die Verschraubung selbst ist rückseitig vorhanden, so dass sie in Figur 1 nicht zu sehen ist.

Die Griffschenkel 32, 34 bilden somit eine U-Form, wobei der mittlere Abschnitt des "U" eine Art Scharnier 52 bildet, das jedoch ohne eine Achse oder ein zusätzliches Teil gebildet ist.

Der obere Griffschenkel 32 geht, hier als Beispiel und nicht einschränkend zu verstehen, einstückig in den Auflagevorsprung 16 über. Der untere Griffschenkel geht, ebenfalls beispielhaft und nicht einschränkend zu verstehen, einstückig in den Schnabel 18 über. Da somit der obere Griffschenkel 32 mit dem unter dem Schnabel 18 liegenden Auflagevorsprung 16 gekoppelt ist, kreuzen sich die Griffschenkel 32, 34, wie dies in den Fig. 1 bis 3 zu sehen ist. Es ergibt sich eine Kreuzungsstelle 40.

Die Kreuzungsstelle 40 ist in der dargestellten Ausführungsform dadurch gebildet, dass der obere Griffschenkel 32 eine, vorzugsweise lang gestreckte Durchtrittsöffnung 42 besitzt, durch die sich der untere Griffschenkel 34 hindurch erstreckt.

Die Durchtrittsöffnung 42 ist als lang gestrecktes Fenster ausgebildet, ist also bei der gezeigten Ausführungsform randseitig geschlossen.

Alternativ dazu kann die Öffnung 42 natürlich auch als seitlich offene Ausnehmung ausgeführt sein, d.h. es ist kein geschlossenes Fenster ausgeführt.

Darüber hinaus kann die Durchtrittsöffnung 42 natürlich auch umgekehrt entsprechend am unteren Griffschenkel 34 vorhanden sein.

In den Griff 14 ist eine Feder, hier eine Blattfeder 50 integriert, die die Griffschenkel 32, 34 voneinander wegdrückt. Dadurch, dass sich die Griffschenkel 32, 34 aber zum Auflagevorsprung 16 und zum Schnabel 18 hin kreuzen, bewirkt die Blattfeder 50, dass in der unbetätigten Ausgangsstellung das zangenartige Ende 12 geschlossen ist (Figur 3).

Zum Öffnen des zangenartigen Endes 12 muss der Griff damit zusammengedrückt werden, so dass mit Bezug auf die Figuren 2 und 3, die Griffschenkel 32, 34 zueinander bewegt werden. Dann ergibt sich die geöffnete Stellung (Figur 2).

Die Blattfeder 50 ist in der gezeigten Ausführungsform U-förmig ausgeführt. Am U-förmigen Verbindungsabschnitt (Scharnier 52) der beiden Griffschenkel 32, 34 verläuft die Blattfeder 50 außenseitig. Danach jedoch (siehe Figuren 2 und 3) verlaufen die beiden Schenkel 54, 56 auf der Innenseite, d.h. auf einander zugewandten Seiten der Griffschenkel 32 bzw. 34 und liegen an ihnen an.

Die Blattfeder 50 ist seitlich durch Vorsprünge 58 auf der Innenseite der Griffschenkel 32, 34 geführt und gehaltert, so dass kein eigenes Befestigungsmittel mehr erforderlich ist.

Die Griffschenkel 32, 34 sowie der Auflagevorsprung 16 und der Schnabel 18 sind aus Kunststoff, insbesondere unter Bildung von zwei Kunststoffteilen, gebildet.

Zur Montage wird das rückseitige Ende des unteren Griffschenkels 34 durch die Durchtrittsöffnung 42 von vorne geschoben. Dann werden im Bereich der Schnittstelle 36 die Griffschenkel 32, 34 miteinander verbunden. Diese Verbindung kann aber auch formschlüssig ausgeführt sein, ohne dass Schraubenverbindungen oder andere Befestigungsmittel notwendig sind. Zum Beispiel könnte eine Art Nut-Federverbindung oder eine Rastverbindung ausgeführt werden.

Gegebenenfalls wäre es auch möglich, dass der Tiegelheber 10 ohne Blattfeder auskommt, so dass die Federwirkung allein durch die beiden Griffschenkel 32, 34, ohne Zusatzteil, realisiert wird.

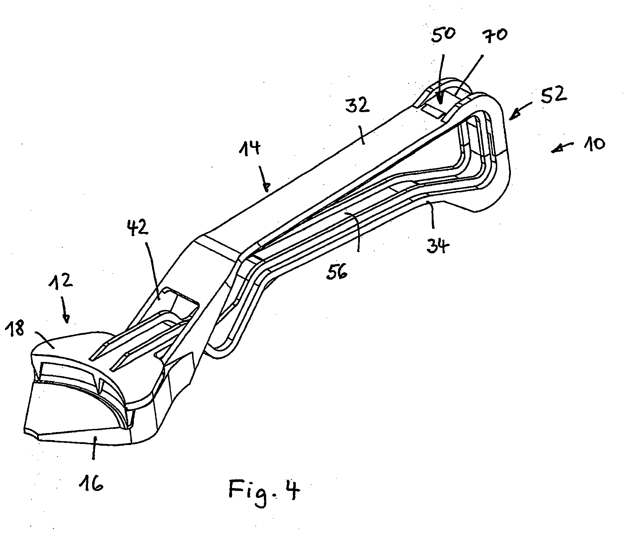

Die Ausführungsform nach Figur 4 entspricht der nach den Figuren 1 bis 3 bis auf wenige Einzelheiten, so dass inhaltlich komplett auf die vorhergehende Ausführungsform verwiesen werden kann und die Ausführungsform nach Figur 4 bezüglich jeglicher Einzelmerkmale als identisch zu der nach Figuren 1 bis 3 angesehen werden kann, bis auf nachfolgende Unterschiede.

Bei der Ausführungsform nach Figur 4 ist die Blattfeder 50 etwas anders ausgeführt.

Die Blattfeder hat nämlich im Bereich des mittleren Abschnitts eine größere Breite als im Bereich der beiden Schenkel des U. Im U-förmigen Bereich hat die Blattfeder 50 das Bezugszeichen 70. In dem Bereich der Schenkel 32, 34 ist der schmälere Abschnitt (Schenkel 56) zu sehen, der auch wieder innenseitig liegt. Auch hier verläuft die Blattfeder 50 im Bereich des Scharniers 52 außenseitig und ansonsten auf den einander zugewandten Innenseiten der Griffschenkel 32, 34.

Es wäre generell, nicht nur auf diese Ausführungsformen begrenzt, auch möglich, zumindest einen Griffschenkel 32, 34 an die Blattfeder unmittelbar anzuspritzen und den anderen Schenkel der Blattfeder 50 in den anderen Griffschenkel 34 oder 32 einzustecken oder, allgemeiner, an ihm zu befestigen.

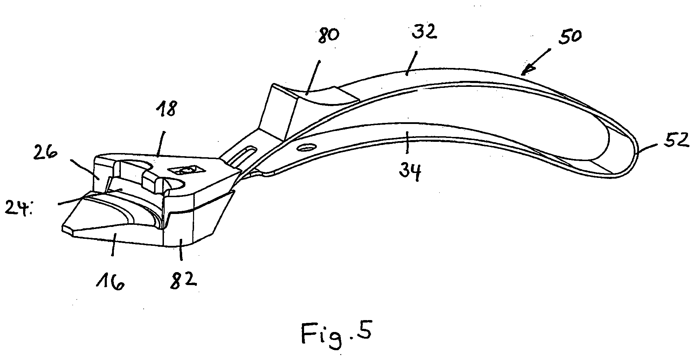

Während bei den bisherigen Ausführungsformen die Griffschenkel 32, 34 einstückig in die ihr zugeordneten Abschnitte des zangenartigen Endes 12 (Auflagevorsprung und Schnabel) übergehen, und zwar einstückig übergehen, ist bei der Ausführungsform nach Figur 5 vorgesehen, dass Griff 14 und zangenseitiges Ende 12 aus verschiedenen Teilen bestehen.

Der Griff 14 wird durch die Blattfeder 50 gebildet, so dass die Blattfeder 50 auch die Griffschenkel 32, 34 definiert und der Mittelabschnitt der U-förmigen Blattfeder 50 ein Scharnier 52.

Zur besseren Handhabbarkeit kann, was jedoch nicht einschränkend zu verstehen ist, am oberen und/oder unteren Griffschenkel 32, 34 ein Kunststoffteil 80 angebracht sein kann, welches die Handhabung erleichtert.

An den oberen Griffschenkel, der den unteren Griffschenkel 34 wieder kreuzt, ist ein Teil 82 angebracht, zum Beispiel durch Anspritzen oder Anschrauben, Klemmen oder dergleichen, wogegen an den unteren Griffschenkel der Schnabel 18 angebracht ist, ebenfalls durch eine Schraubverbindung, Klemmverbindung, Rastverbindung oder dergleichen oder auch durch Anspritzen.

Das Teil 82 umfasst dann den Auflagevorsprung 16 sowie den Absatz mit der Seitenfläche 24.

Bei dieser Ausführungsform sind, nur beispielhaft zu verstehen, zwei Abkröpfungen 26 vorhanden. Ansonsten entspricht auch diese Ausführungsform in ihren Details exakt den vorhergehenden Ausführungsformen.

Die Unterseite 90 des abgekröpften Endes des Griffs liegt in einer Ebene E, in der auch ein, z.B. ebener Abschnitt der Unterseite 92 des Endes 12 liegt, so dass sich eine stabile Ablagefläche ergibt. Dadurch liegt der Tiegelheber 10 selbst bei geklemmtem Tiegel sicher auf einer Unterlage liegen.

### Bezugszeichenliste

- 10: Tiegelheber
- 12: Ende
- 14: Griff
- 16: Auflagevorsprung
- 18: Schnabel
- 19: Ende
- 20: Oberseite
- 22: Absatz
- 24: Seitenfläche
- 26: Abkröpfung
- 28: Boden
- 30: Tiegelrand
- 32: Griffschenkel
- 34: Griffschenkel
- 36: Schnittstelle
- 40: Kreuzungsstelle
- 42: Durchtrittsöffnung
- 50: Blattfeder
- 52: Scharnier
- 54: Schenkel
- 56: Schenkel
- 58: Vorsprünge
- 70: U-förmiger Bereich
- 80: Kunststoffteil
- 82: Teil
- 90: Unterseite
- 92: Unterseite

## Patentansprüche

1. Tiegelheber zum formschlüssigen Erfassen eines Tiegels einer Waage, wobei der Tiegel einen Boden (28) und einen nach oben abstehenden, umlaufenden Rand (30) hat, wobei der Tiegelheber (10) ein tiegelseitiges, zangenartiges Ende (12) und einen entgegengesetzten Griff (14) aufweist, und wobei das zangenartige Ende (12) einen schaufelartigen Auflagevorsprung (16), der unter dem Boden (28) des Tiegels zu liegen kommt, sowie einen zum Auflagevorsprung (16) hin und von ihm weg beweglichen, über dem Auflagevorsprung (16) positionierten Schnabel (18) hat, der abgekröpft ist und den Rand (30) des Tiegels erfasst und klemmt, wobei
der Auflagevorsprung (16) in entgegengesetzter Richtung zum Griff (14) den am weitesten vorspringenden Teil des Tiegelhebers (10) bildet,
der Griff (14) zwei zueinander bewegliche Griffschenkel (32, 34) hat, nämlich einen oberen und einen unteren Schenkel, wobei ein Griffschenkel mit dem Auflagevorsprung (16) und der andere Griffschenkel mit dem Schnabel (18) gekoppelt ist, so dass mit Relativbewegung der Griffschenkel (32, 34) zueinander der Auflagevorsprung (16) und der Schnabel (18) relativ zueinander bewegt werden, um das zangenartige Ende (12) zu öffnen und zu schließen,
die beiden Griffschenkel (32, 34) am freien Griffende zur Bildung eines Scharniers (52) ineinander übergehen oder miteinander gekoppelt sind, und
der obere Griffschenkel (32) mit dem Auflagevorsprung (16) und der untere Griffschenkel (34) mit dem Schnabel (18) gekoppelt ist und sich die Griffschenkel (32, 34) in Seitenansicht kreuzen, und an einer Kreuzungsstelle (40) ein Griffschenkel (32) eine Durchtrittsöffnung (42) hat, durch die sich der andere Griffschenkel (34) hindurch erstreckt.

2. Tiegelheber nach Anspruch 1, **dadurch gekennzeichnet, dass** die Griffschenkel (32, 34) am freien Griffende unter Bildung einer U-Form ineinander übergehen.

3. Tiegelheber nach einem der vorhergehenden Ansprüche, **dadurch gekennzeichnet, dass** ein Griffschenkel (32) einstückig in den Auflagevorsprung (16) und der andere Griffschenkel (34) einstückig in den Schnabel (18) übergeht.

4. Tiegelheber nach einem der vorhergehenden Ansprüche, **dadurch gekennzeichnet, dass** die Griffschenkel (32, 34) federnd zueinander ausgebildet sind.

5. Tiegelheber nach einem der vorhergehenden Ansprüche, **dadurch gekennzeichnet, dass** in den Griff (14) eine mit beiden Griffschenkeln (32, 34) verbundene Blattfeder (50) integriert ist oder die Griffschenkel (32, 34) durch eine U-förmige Blattfeder (50) gebildet sind.

6. Tiegelheber nach einem der vorhergehenden Ansprüche, **dadurch gekennzeichnet, dass** die Griffschenkel jeweils aus einem Kunststoffspritzgussteil gebildet und am Griffende miteinander gekoppelt sind.

7. Tiegelheber nach einem der vorhergehenden Ansprüche, **dadurch gekennzeichnet, dass** der Auflagevorsprung (16) zum freien Ende (19) hin zuläuft und/oder zum freien Ende (19) hin stetig dünner wird.

8. Tiegelheber nach einem der vorhergehenden Ansprüche, **dadurch gekennzeichnet, dass** der Auflagevorsprung (16) am griffseitigen Ende in einen nach oben ragenden Absatz (22) übergeht und der Schnabel (18) zumindest eine nach unten abstehende Abkröpfung (26) hat, die gegen die Seitenfläche (24) des Absatzes (22) beweglich ist.

9. Tiegelheber nach Anspruch 8, **dadurch gekennzeichnet, dass** bei nicht geklemmtem und nicht eingesetztem Tiegel die wenigstens eine Abkröpfung (26) an der Seitenfläche (24) anliegt.

10. Tiegelheber nach einem der vorhergehenden Ansprüche, **dadurch gekennzeichnet, dass** der Tiegelheber (10) in nicht betätigtem Zustand eine vorgegebene Ausgangsstellung hat, in der das zangenartige Ende geschlossen ist.

11. Tiegelheber nach einem der vorhergehenden Ansprüche, **dadurch gekennzeichnet, dass** eine Unterseite (90) eines nach unten abgekröpften Endes des Griffs (14) in einer Ebene (E) liegt, in der auch ein Abschnitt einer Unterseite (92) des zangenartigen Endes (12) liegt.

## Claims

1. Pan lifting device for mechanically positive gripping of a pan of a weighing machine, wherein the pan has a base (28) and an upwardly projecting encircling edge (30), wherein the pan lifting device (10) has a tongs-like end (12) at the pan side and an opposite handle (14), and wherein the tongs-like end (12) has a shovel-like support projection (16), which comes to lie under the base (28) of the pan, and a beak (18), which is movable towards and away from the support projection (16) and positioned thereabove and which is cranked and grips and clamps the edge (30) of the pan, wherein
the support projection (16) in the opposite direction to the handle (14) forms the widest projecting part of the pan lifting device (10),
the handle (14) has two relatively movable grip limbs (32, 34), namely an upper and a lower limb, wherein one grip limb is coupled with the support projection (16) and the other grip limb with the beak (18) so that under relative movement of the grip limbs (32, 34) with respect to one another the support projection (16) and the beak (18) are moved relative to one another so as to open and close the tongs-like end (12),
the two grip limbs (32, 34) merge into one another or are coupled together at the free end so as to form a hinge (52) and
the upper grip limb (32) with the support projection (16) and the lower grip limb (34) with the beak (18) are coupled and the grip limbs (32, 34) intersect at side view, and at an intersection point (40) one grip limb (32) has a passage opening (42) through which the other grip limb (34) extends.

2. Pan lifting device according to claim 1, **characterised in that** the grip limbs (32, 34) merge into one another at the free handle end with formation of a U shape.

3. Pan lifting device according to any one of the preceding claims, **characterised in that** one grip limb (32) integrally merges into the support projection (16) and the other grip limb (34) integrally merges into the beak (18).

4. Pan lifting device according to any one of the preceding claims, **characterised in that** the grip limbs (32, 34) are constructed to be resilient relative to one another.

5. Pan lifting device according to any one of the preceding claims, **characterised in that** a leaf spring (50) connected with both grip limbs (32, 34) is integrated in the handle (14) or the grip limbs (32, 34) are formed by a U-shaped leaf spring (50).

6. Pan lifting device according to any one of the preceding claims, **characterised in that** the grip limbs are each formed from a plastics-material injection-moulded part and are coupled together at the handle end.

7. Pan lifting device according to any one of the preceding claims, **characterised in that** the support projection (16) tapers towards the free end (19) and/or is progressively thinner towards the free end (19).

8. Pan lifting device according to any one of the preceding claims, **characterised in that** the support projection (16) goes over at the handle-side end into an upwardly projecting shoulder (22) and the beak (18) has at least one downwardly projecting crank portion (26) which is movable towards the side surface (24) of the shoulder (22).

9. Pan lifting device according to claim 8, **characterised in that** when a pan is not clamped and not inserted the at least one cranked portion (26) bears against the side surface (24).

10. Pan lifting device according to any one of the preceding claims, **characterised in that** the pan lifting device (10) in non-actuated state has a predetermined starting setting in which the tongs-like end is closed.

11. Pan lifting device according to any one of the preceding claims, **characterised in that** a lower side (90) of a downwardly cranked end of the handle (14) lies in a plane (E) in which a section of a lower side (92) of the tongs-like end (12) also lies.

## Revendications

1. Tenaille de creuset destinée à saisir par complémentarité de formes un creuset d'une balance, le creuset présentant un fond (28) et un bord (30) périphérique faisant saillie vers le haut, la tenaille de creuset (10) comprenant une extrémité (12) en forme de pince côté creuset et une poignée (14) opposée, et l'extrémité (12) en forme de pince présentant une saillie d'appui (16) en forme de pelle, qui vient se situer sous le fond (28) du creuset, ainsi qu'un bec (18) mobile en direction de la saillie d'appui (16) et à distance de celle-ci, qui est positionné au-dessus de la saillie d'appui (16), qui est coudé et qui saisit et serre le bord (30) du creuset,
la saillie d'appui (16) formant dans le sens opposé à la poignée (14) la partie de la tenaille de creuset (10) la plus en saillie,
la poignée (14) présentant deux branches de poignée (32, 34) mobiles l'une par rapport à l'autre, à savoir une branche supérieure et une branche inférieure, une branche de poignée étant accouplée à la saillie d'appui (16) et l'autre branche de poignée au bec (18), de sorte qu'un déplacement relatif des branches de poignée (32, 34) l'une par rapport à l'autre fait se déplacer la saillie d'appui (16) et le bec (18) l'une par rapport à l'autre, afin d'ouvrir et de fermer l'extrémité (12) en forme de pince,
les deux branches de poignée (32, 34) se prolongeant l'une dans l'autre ou étant accouplées l'une à l'autre à l'extrémité libre de la poignée pour former une charnière (52), et
la branche supérieure de poignée (32) étant accouplée à la saillie d'appui (16) et la branche inférieure de poignée (34) étant accouplée au bec (18) et les branches de poignée (32, 34) se croisant en vue latérale, et une branche de poignée (32) présentant en un point de croisement (40) une ouverture de passage (42) à travers laquelle s'étend l'autre branche de poignée (34).

2. Tenaille de creuset selon la revendication 1, **caractérisée en ce que** les branches de poignée (32, 34) se prolongent l'une dans l'autre à l'extrémité libre de la poignée, en formant un U.

3. Tenaille de creuset selon l'une quelconque des revendications précédentes, **caractérisée en ce qu'**une branche de poignée (32) se prolonge dans la saillie d'appui (16) de manière à former une seule pièce et l'autre branche de poignée (34) se prolonge dans le bec (18) de manière à former une seule pièce.

4. Tenaille de creuset selon l'une quelconque des revendications précédentes, **caractérisée en ce que** les branches de poignée (32, 34) sont élastiques l'une par rapport à l'autre.

5. Tenaille de creuset selon l'une quelconque des revendications précédentes, **caractérisée en ce qu'**un ressort à lames (50) relié aux deux branches de poignée (32, 34) est intégré dans la poignée (14) ou les branches de poignée (32, 34) sont formées par un ressort à lames (50) en forme de U.

6. Tenaille de creuset selon l'une quelconque des revendications précédentes, **caractérisée en ce que** les branches de poignée sont formées chacune d'une pièce moulée par injection en matière plastique et sont accouplées l'une à l'autre à l'extrémité de la poignée.

7. Tenaille de creuset selon l'une quelconque des revendications précédentes, **caractérisée en ce que** la saillie d'appui (16) se termine en direction de l'extrémité libre (19) et/ou s'amincit en continu en direction de l'extrémité libre (19).

8. Tenaille de creuset selon l'une quelconque des revendications précédentes, **caractérisée en ce que** la saillie d'appui (16) se prolonge à l'extrémité côté poignée dans une partie en retrait (22) faisant saillie vers le haut et le bec (18) présente au moins un coude (26) faisant saillie vers le bas, qui est mobile contre la surface latérale (24) de la partie en retrait (22).

9. Tenaille de creuset selon la revendication 8, **caractérisée en ce que**, lorsque le creuset n'est pas serré et pas utilisé, le ou les coudes (26) s'appliquent contre la surface latérale (24).

10. Tenaille de creuset selon l'une quelconque des revendications précédentes, **caractérisée en ce que** la tenaille de creuset (10), dans l'état non actionné, présente une position de départ prédéfinie dans laquelle l'extrémité en forme de pince est fermée.

11. Tenaille de creuset selon l'une quelconque des revendications précédentes, **caractérisée en ce qu'**une face inférieure (90) d'une extrémité coudée vers le bas de la poignée (14) se situe dans un plan (E) dans lequel se situe également une partie d'une face inférieure (92) de l'extrémité (12) en forme de pince.
